# EUROPÄISCHE PATENTSCHRIFT

(11) **EP 1 831 509 B1**
(45) Veröffentlichungstag und Bekanntmachung des Hinweises auf die Patenterteilung: **21.04.2010**
(21) Anmeldenummer: 05821889.2
(22) Anmeldetag: 17.12.2005
(51) Int. Cl.: F01N 3/08, F01N 11/00

(54) **VERFAHREN ZUR ÜBERWACHUNG DER STICKOXID-SPEICHERFÄHIGKEIT EINES ALS STARTKATALYSATORS EINGESETZTEN STICKOXID-SPEICHERKATALYSATORS**
METHOD FOR MONITORING THE NITROGEN OXIDE STORAGE CAPACITY OF A NITROGEN OXIDE TRAPPING CATALYST USED AS A START-UP CATALYTIC CONVERTER
PROCEDE DE SURVEILLANCE DE LA CAPACITE D'ADSORPTION D'OXYDE D'AZOTE D'UN PIEGE D'OXYDE D'AZOTE EMPLOYE EN TANT QUE CATALYSEUR DE DEMARRAGE

(30) Priorität: 23.12.2004 DE 102004062149
(43) Veröffentlichungstag der Anmeldung: 12.09.2007
(73) Patentinhaber: Umicore AG & Co. KG, 63457 Hanau-Wolfgang (DE)
(72) Erfinder: BREMM, Stephan, 63796 Kahl (DE); TOMANIK, Christian Manfred, 35447 Reiskirchen (DE); GOEBEL, Ulrich, 65795 Hattersheim (DE); MUELLER, Wilfried, 61184 Karben (DE); KREUZER, Thomas, 61184 Karben (DE)
(74) Vertreter: Herrmann, Reinhard
(86) Internationale Anmeldenummer: PCT/EP2005/013617
(87) Internationale Veröffentlichungsnummer: WO 2006/069652

(56) Entgegenhaltungen:
- EP-A- 0 936 349
- EP-A- 1 152 140
- EP-A- 1 321 643
- DE-A1- 10 125 759
- DE-A1- 19 744 738
- DE-A1- 19 816 175
- DE-A1- 19 918 756

## Beschreibung

Die vorliegende Erfindung betrifft ein Verfahren zur Überwachung der Stickoxid-Speicherfähigkeit eines als Startkatalysators eingesetzten Stickoxid-Speicherkatalysators in einer Abgasreinigungsanlage eines Kraftfahrzeugs mit Magermotor, welche den Startkatalysator und einen ebenfalls als Stickoxid-Speicherkatalysator ausgebildeten Hauptkatalysator enthält

Auf dem Gebiet der Benzinmotoren wurden zur Verminderung des Kraftstoffverbrauchs sogenannte Magermotoren entwickelt, die im Teillastbetrieb mit mageren Luft/Kraftstoffgemischen betrieben werden. Ein mageres Luft/Kraftstoffgemisch enthält eine höhere Sauerstoffkonzentration als für die vollständige Verbrennung des Kraftstoffes benötigt wird. Im entsprechenden Abgas liegen dann die oxidierenden Komponenten Sauerstoff (O₂), Stickoxide (NOx) im Überschuß gegenüber den reduzierenden Abgaskomponenten Kohlenmonoxid (CO), Wasserstoff (H₂) und Kohlenwasserstoffen (HC) vor. Mageres Abgas enthält gewöhnlich 3 bis 15 Vol.-% Sauerstoff. Innerhalb des Last- und Vollastbetriebs erfolgt aber auch bei mager betriebenen Ottomotoren eine stöchiometrische oder sogar unterstöchiometrische, das heißt fette, Luft/Kraftstoffaufbereitung.

Dieselmotoren arbeiten dagegen in der Regel unter Betriebsbedingungen mit weit überstöchiometrischen Luft/Kraftstoff-Gemischen. Erst in den letzten Jahren wurden Dieselmotoren entwickelt, die für kurze Dauer auch mit fetten Luft/Kraftstoff-Gemischen betrieben werden können. Auch Dieselmotoren, insbesondere solche mit der Möglichkeit fetter Betriebsphasen, werden im Rahmen der vorliegenden Erfindung als Magermotoren bezeichnet.

Wegen des hohen Sauerstoffgehaltes des Abgases von Magermotoren können die in ihm enthaltenen Stickoxide nicht wie bei stöchiometrisch betriebenen Ottomotoren mit Hilfe von Dreiweg-Katalysatoren kontinuierlich unter gleichzeitiger Oxidation von Kohlenwasserstoffen und Kohlenmonoxid zu Stickstoff reduziert werden. Zur Entfernung der Stickoxide aus dem Abgas dieser Motoren wurden daher sogenannte Stickoxid-Speicherkatalysatoren entwickelt, die die im mageren Abgas enthaltenen Stickoxide in Form von Nitraten speichern.

Die Arbeitsweise von Stickoxid-Speicherkatalysatoren wird ausführlich in der SAE-Schrift SAE 950809 beschrieben. Stickoxid-Speicherkatalysatoren bestehen demgemäß aus einem Katalysatormaterial, welches zumeist in Form einer Beschichtung auf einem inerten Wabenkörper aus Keramik oder Metall, einem sogenannten Tragkörper, aufgebracht ist. Das Katalysatormaterial enthält das Stickoxid-Speichermaterial und eine katalytisch aktive Komponente. Das Stickoxid-Speichermaterial wiederum besteht aus der eigentlichen Stickoxid-Speicherkomponente, die auf einem Trägermaterial in hochdisperser Form abgeschieden ist. Als Speicherkomponenten werden vorwiegend die basischen Oxide der Alkalimetalle, der Erdalkalimetalle und der Seltenerdmetalle, insbesondere aber Bariumoxid, eingesetzt, welche mit Stickstoffdioxid zu den entsprechenden Nitraten reagieren.

Als katalytisch aktive Komponenten werden gewöhnlich die Edelmetalle der Platingruppe verwendet, die in der Regel gemeinsam mit der Speicherkomponente auf dem Trägermaterial abgeschieden werden. Als Trägermaterial wird überwiegend aktives, hochoberflächiges Aluminiumoxid eingesetzt. Die katalytisch aktiven Komponenten können jedoch auch auf einem separaten Trägermaterial wie zum Beispiel aktivem Aluminiumoxid aufgebracht sein.

Die Aufgabe der katalytisch aktiven Komponenten ist es, im mageren Abgas Kohlenmonoxid und Kohlenwasserstoffe zu Kohlendioxid und Wasser umzusetzen. Außerdem sollen sie den Anteil des Abgases an Stickstoffmonoxid zu Stickstoffdioxid oxidieren, damit es mit dem basischen Speichermaterial zu Nitraten reagieren kann (Speicherphase oder auch Magerbetrieb), denn die Stickoxide im Abgas von Magermotoren bestehen je nach Betriebsbedingungen des Motors zu 65 bis 95 Vol.-% aus Stickstoffmonoxid, welches nicht mit den Speicherkomponenten reagieren kann.

Neben den genannten Komponenten kann der Stickoxid-Speicherkatalysator noch Sauerstoff speichernde Komponenten enthalten. Er kann in diesem Fall neben der Stickoxidspeicherung auch Funktionen eines konventionellen Dreiwegkatalysators übernehmen. Als Sauerstoff speichernde Komponente wird zum größten Teil Ceroxid eingesetzt. Der Stickoxid-Speicherkatalysator besitzt dann neben seiner Stickoxid-Speicherfunktion auch eine Sauerstoff-Speicherfunktion, er ist somit bifunktional.

Mit zunehmender Einlagerung der Stickoxide ins Speichermaterial nimmt die Speicherfähigkeit des Materials ab und es kommt zu einem anwachsenden Schlupf von Stickoxiden durch den Speicherkatalysator. Er muß daher von Zeit zu Zeit regeneriert werden. Hierzu wird der Motor für kurze Zeit mit stöchiometrisch zusammengesetzten oder fetten Luft/Kraftstoff-Gemischen betrieben (sogenannte Regenerationsphase oder Fettbetrieb). Unter den reduzierenden Bedingungen im fetten Abgas werden die gebildeten Nitrate zu Stickoxiden NOx zersetzt und unter Verwendung von Kohlenmonoxid, Wasserstoff und Kohlenwasserstoffen als Reduktionsmittel zu Stickstoff unter Bildung von Wasser und Kohlendioxid reduziert.

Beim Betrieb des Stickoxid-Speicherkatalysators wechseln sich Speicherphase und Regenerationsphase regelmäßig ab. Die Speicherphase dauert gewöhnlich zwischen 60 und 120 Sekunden, während die Regenerationsphase schon in weniger als 20 Sekunden abgeschlossen ist. Zur Ermittlung des optimalen Umschaltzeitpunktes von der Speicherphase zur Regenerationsphase wird gewöhnlich hinter dem Speicherkatalysator ein Stickoxid-Sensor angeordnet. Steigt die von diesem Sensor gemessene Stickoxid-Konzentration im Abgas über einen vorher festgelegten Schwellwert an, so wird die Regeneration des Katalysators eingeleitet. Die Stickoxid-Konzentration im Abgas dient also als Kriterium zur Einleitung der Regeneration.

Moderne Stickoxid-Speicherkatalysatoren haben einen Arbeitsbereich zwischen etwa 150 und 500 °C, das heißt unterhalb dieser Temperatur kann der Speicherkatalysator die im Abgas enthaltenen Stickoxide nicht mehr in Form von Nitraten speichern, weil seine katalytisch aktiven Komponenten noch nicht in der Lage sind, die Stickoxide zu Stickstoffdioxid zu oxidieren. Oberhalb von 500 °C werden die als Nitrate gespeicherten Stickoxide thermisch zersetzt und als Stickoxide ins Abgas abgegeben.

Ein wichtiges Problem bei heutigen Abgasreinigungsverfahren ist die Überprüfung der korrekten Funktion der verwendeten Katalysatoren, um einen rechtzeitigen Austausch von nicht mehr funktionstüchtigen Katalysatoren zu ermöglichen. Dies gilt auch für Stickoxid-Speicherkatalysatoren, die zum einen durch den im Kraftstoff vorhandenen Schwefel und zum anderen durch thermische Überlastung in ihrer Stickoxid-Speicherfähigkeit geschädigt werden können. Während die Vergiftung durch Schwefel in der Regel durch Regeneration bei erhöhten Temperaturen wieder rückgängig gemacht werden kann, handelt es sich bei der thermischen Schädigung um einen irreversiblen Vorgang.

Bei bifunktionalen Speicherkatalysatoren können prinzipiell beide Speicherfunktionen durch Vergiftung und thermische Einflüsse geschädigt werden. Dabei bedingt die Schädigung der einen Funktion nicht notwendigerweise die Schädigung der anderen Funktion. Da Stickoxide und Sauerstoff beides oxidierende Komponenten sind, lassen sich ihre Wirkungen nicht klar voneinander trennen, so daß es zu Fehldiagnosen bei der Prüfung des Katalysators kommen kann. Die DE 198 16 175 A1 beschreibt eine Möglichkeit, beide Speicherfunktionen mit Hilfe eines hinter dem Speicherkatalysator angeordneten Sauerstoff-Sensors getrennt zu beurteilen.

Die DE 199 18 756 A1 offenbart eine Anordnung zur Reinigung eines Abgases einer Verbrennungskraftmaschine mit einem im Abgaskanal angeordneten Katalysatorsystem zur Reduzierung eines Stickoxid-Anteils des Abgases. Das Katalysatorsystem enthält einen ersten NOx-Speicherkatalysator und beabstandet zu diesem einen zweiten NOx-einen ersten NOx-Speicherkatalysator und beabstandet zu diesem einen zweiten NOx-Speicherkatalysator. Hinter den beiden Katalysatoren sind Gassensorelemente angeordnet, bei denen es sich um Lambda-Sonden und/oder NOx-Sensoren handelt.

Die vorliegende Erfindung befaßt sich mit einem Abgasreinigungssystem aus einem Startkatalysator und einem Hauptkatalysator, wobei beide Katalysatoren als Stickoxid-Speicherkatalysatoren ausgebildet sind. Bei einem solchen Katalysatorsystem ist der Startkatalysator im Betrieb besonders hohen Temperaturen ausgesetzt und unterliegt daher einer schnelleren Alterung seiner Stickoxid-SpeicherFähigkeit als der Hauptkatalysator. Es ist daher erforderlich, den Alterungszustand des Startkatalysators häufiger zu untersuchen, um rechtzeitig eine Fehlfunktion des Katalysators feststellen zu können. Es ist daher Aufgabe der vorliegenden Erfindung, ein Verfahren zur Bestimmung des Alterungszustandes der Stickoxid-Speicherfunktion des Startkatalysators unabhängig von seiner Sauerstoff-Speicherfunktion zu ermitteln.

Das Verfahren zur Lösung der Aufgabe geht von einem Katalysatorsystem aus einem Startkatalysator und einem Hauptkatalysator aus, wobei beide Katalysatoren sowohl eine Stickoxid-Speicherfunktion und zumindest der Startkatalysator zusätzlich eine Sauerstoff-Speicherfunktion aufweist. Im Normalbetrieb des Katalysatorsystems wird von Zeit zu Zeit durch kurzzeitiges Umschalten des Motors von Magerbetrieb in den Fettbetrieb eine Total-Regeneration des Katalysatorsystems vorgenommen, wenn die Auswertung des Stickoxid-Schlupfes hinter dem Katalysatorsystem ein Regenerationskriterium übersteigt.

Zur Überprüfung der Stickoxid-Speicherfähigkeit des Startkatalysators wird das gesamte katalysatorsystem bis zum Erreichen des Regenerationskriteriums mit Stickoxiden beladen. Dann wird eine Teil-Regeneraton des Katalysatorsystems vorgenommen,die nur aus einer Regeneration des Startkatalysators besteht, wozu der Fettbetrieb beendet und in den Magerbetrieb zurückgeschaltet wird, wenn zwischen Startkatalysator und Hauptkatalysator ein Durchbruch fetten Abgases registriert wird. Die Zeitdauer nach dem Zurückschalten in den Magerbetrieb bis zum erneuten Übersteigen des Regenerationskriteriums hinter dem Katalysatorsystem wird als Maß für die Stickoxid-Speicherfähigkeit des Startkatalysators gemessen.

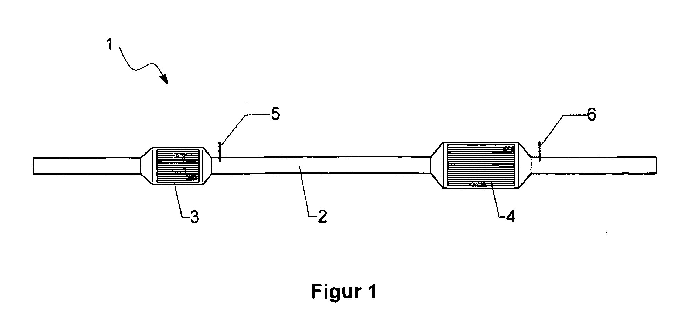

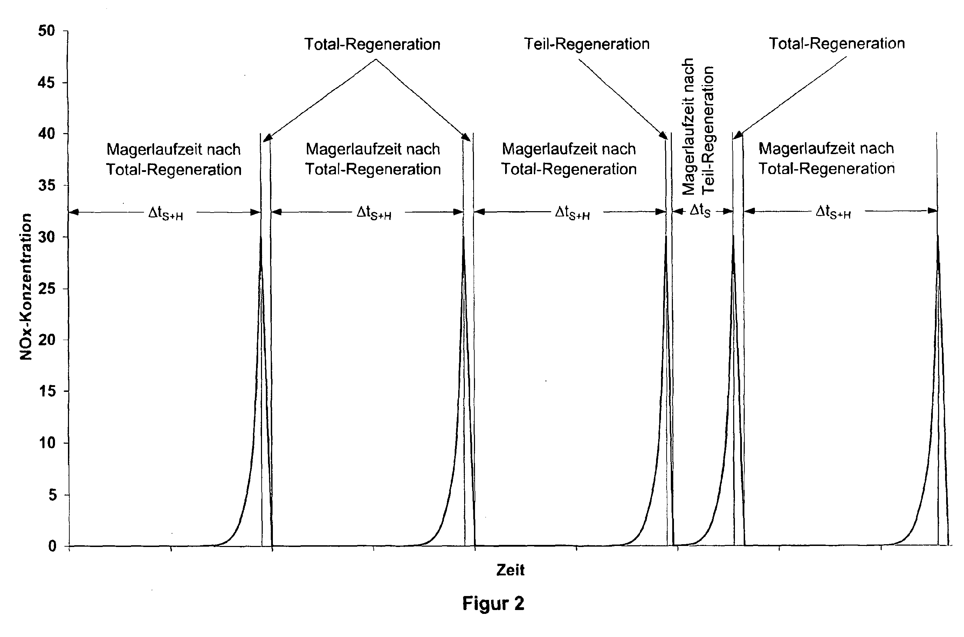

Die Erfindung wird an Hand der beiden Figuren 1 und 2 näher erläutert. Es zeigen
- **Figur 1:**: Eine Abgasreinigungsanlage für einen Magermotor mit einem Startkatalysator und einem Hauptkatalysator
- **Figur 2:**: Schematische Darstellung des Verfahrensablaufs gemäß Erfindung

Figur 1 zeigt eine Abgasreinigungsanlage (1) für den Magermotor eines Kraftfahrzeugs. Die Abgasreinigungsanlage enthält in einer Abgasleitung (2) ein Katalysatorsystem aus einem Startkatalysator (3) und einem Hauptkatalysator (4). Der Startkatalysator befindet sich gewöhnlich dicht am Motor, während der Hauptkatalysator gewöhnlich im Unterbodenbereich des Fahrzeugs angeordnet ist. Hinter dem Startkatalysator ist ein Sauerstoff-Sensor (5) und hinter dem Hauptkatalysator ein Stickoxid-Sensor (6) in die Abgasleitung eingebracht.

Beide Katalysatoren sind als Stickoxid-Speicherkatalysatoren ausgebildet und müssen daher von Zeit zu Zeit durch Umschalten des Motors von Magerbetrieb (Speicherphase) in den Fettbetrieb (Regenerationsphase) regeneriert werden, um die während des Magerlaufs des Motors abgespeicherten Stickoxide wieder zu desorbieren und zu unschädlichen Komponenten umzusetzen. Zur Bestimmung des Umschaltpunktes dient der Stickoxid-Sensor hinter dem Hauptkatalysator. Als Kriterium für das Umschalten vom Magerbetrieb in den Fettbetrieb kann die vom Stickoxid-Sensor gemessene Stickoxid-Konzentration im Abgas herangezogen werden. Übersteigt sie einen vorgegebenen Grenzwert, so wird die Regeneration eingeleitet. Typischerweise liegt dieser Grenzwert zwischen 30 und 100 Vol.-ppm, bevorzugt zwischen 30 und 60 Vol.-ppm.

Es kann aber auch ein von der Stickoxid-Konzentration abgeleitetes Kriterium als Regenerationskriterium verwendet werden, wie zum Beispiel die während des Magerlaufs akkumulierte Stickoxid-Emission hinter dem Hauptkatalysator.

Gewöhnlich wird nach Erreichen des Regenerationskriteriums eine Total-Regeneration des Katalysatorsystems vorgenommen, das heißt der Fettbetrieb des Motors wird nach Intensität und Dauer so gewählt, daß sowohl der Startkatalysator als auch der Hauptkatalysator regeneriert werden. Als Kriterium für die Beendigung der Regeneration gilt dabei der Durchbruch von fettem Abgas hinter dem Hauptkatalysator. Dieser Durchbruch kann mit dem Stickoxid-Sensor ermittelt werden, da ein solcher Sensor auch fettes Abgas detektieren kann. Die Magerlaufzeit, das heißt die Zeit zwischen zwei notwendigen Regenerationen des Katalysatorsystems kann als Maß für die noch vorhandene Stickoxid-Speicherkapazität des Gesamtsystems angesehen werden.

Da der Startkatalysator wegen seiner motornahen Anordnung teilweise sehr hohen Temperaturen ausgesetzt ist, ist es ratsam, seine Speicherfähigkeit getrennt von derjenigen des Hauptkatalysators zu bestimmen. Erfindungsgemäß wird hierzu das gesamte Katalysatorsystem wie auch in den anderen Magerlaufphasen bis zum Erreichen des Regenerationskriteriums mit Stickoxiden beladen oder auch bis zu einem anderen (niedrigeren) Regenerationskriterium. Statt einer Total-Regeneration wird dann jedoch nur eine Teil-Regeneration vorgenommen, die nur aus einer Regeneration des Startkatalysators besteht. Zur Beendigung der Teil-Regeneration kann das Signal des hinter dem Startkatalysator in der Abgasanlage angeordneten Sauerstoff-Sensors verwendet werden. Registriert der Sauerstoff-Sensor einen Durchbruch von fettem Abgas durch den Startkatalysator, wird die Teil-Regeneration beendet. Die Stickoxid-Beladung des Hauptkatalysators bleibt bei dieser Regeneration nahezu unberührt.

Nach erfolgter Teil-Regeneration wird der Motor in den Magerbetrieb zurückgeschaltet und die Zeit bis zum erneuten Erreichen des angewendeten Regenerationskriteriums gemessen. Da bei der Teil-Regeneration die Stickoxid-Beladung des Hauptkatalysators im wesentlich unberührt bleibt, ist die jetzt gemessene Zeit allein von der noch verbliebenen Stickoxid-Speicherfähigkeit des Startkatalysators abhängig.

Figur 2 zeigt schematisch den eben beschriebenen Verfahrensablauf. Sie zeigt die Stickoxid-Konzentration hinter dem Hauptkatalysator in Abhängigkeit von der Zeit über mehrere Zyklen aus Speicherphase und Regenerationsphase. Zeitachse und Konzentrationsachse sind in willkürlichen Einheiten skaliert. Als Regenerationskriterium ist in Figur 2 das Erreichen eines Wertes für die NOx-Konzentration hinter dem Hauptkatalysator von 30 angenommen worden. Nach erfolgter Regeneration des Katalysatorsystems ist der Stickoxid-Schlupf durch das System zunächst über einen gewissen Zeitraum Null. Erst nach allmählicher Erschöpfung der Speicherkapazität kommt es zu einem Durchbruch von Stickoxiden durch das System. Die Regeneration wird eingeleitet, wenn die Konzentration an Stickoxiden hinter dem Hauptkatalysator einen vorgegebenen Grenzwert übersteigt, oder wenn ein anderes, abgeleitetes Kriterium erfüllt ist. Die hierfür benötigte Zeitdifferenz Δt_{S+H} ist ein Maß für die Stickoxid-Speicherfähigkeit des Gesamtsystems. Δt_{S+H} wird in Figur 2 auch als Magerlaufzeit nach Total-Regeneration bezeichnet. Δt_{S} ist dagegen die Magerlaufzeit nach Regeneration nur des Startkatalysators (Teil-Regeneration des Katalysatorsystems) und ist erfindungsgemäß ein Maß für die noch verbliebene Stickoxid-Speicherkapazität des Startkatalysators.

Gegenüber dem in der DE 198 16 175 A1 vorgeschlagenen Verfahren zur getrennten Beurteilung von Stickoxid-Speicherfunktion und Sauerstoff-Speicherfunktion weist das jetzt vorgeschlagene Verfahren deutliche Vorteile auf. Gemäß der DE 198 16 175 A1 wird die Stickoxid-Speicherfähigkeit durch Differenzbildung zweier relativ kleiner Zeitintervalle beurteilt, nämlich der Differenz zwischen Regenerationsdauer beider Speicherfunktionen und der Wiederauffüllung des Sauerstoffspeichers nach der Regeneration. Das ist naturgemäß mit relativ großen Fehlern behaftet. Im Gegensatz dazu wird die Stickoxid-Speicherfähigkeit des Startkatalysators getrennt von der Sauerstoff-Speicherfunktion durch Messen der Magerlaufzeit nach Teil-Regeneration ermittelt. Die Magerlaufzeit ist in der Regel um den Faktor 5 bis 100 größer als die Zeitdauer der Teil-Regeneration und kann entsprechend genau gemessen werden.

Wie schon erläutert, kann das Verfahren unter Verwendung verschiedener Regenerationskriterien betrieben werden. Bevorzugt wird das Übersteigen der Stickoxidkonzentration im Abgas hinter dem Katalysatorsystem über einen vorgegebenen Wert gewählt. Alternativ kann die Stickoxidkonzentration im Abgas hinter dem Katalysatorsystem während der Magerlaufzeit integriert werden. Übersteigt dieser kumulierte Stickoxidwert einen vorgegebenen Grenzwert, so wird die Regeneration eingeleitet.

Das Verfahren kann sowohl bei Magermotoren mit einem wand/luft-geführten oder einem strahlgeführten Betrieb eingesetzt werden.

Bei dem in Figur 1 gezeigten Sauerstoff-Sensor (5) kann es sich um eine sogenannte Sprung-Lambdasonde oder um eine Linear-Lambdasonde handeln. Das Signal einer Sprung-Lambdasonde schlägt in einem engen Luftzahlintervall um 1 herum von mager nach fett oder umgekehrt um, während die Linear-Lambdasonde ein linear mit dem Sauerstoffgehalt des Abgases ansteigendes Signal liefert. Die Funktionsweise der für das Verfahren geeigneten Lambda-Sonden werden im Kraftfahrttechnischen Taschenbuch von Bosch, VDI-Verlag, 20. Auflage von 1995, Seiten 490 bis 492, beschrieben.

## Patentansprüche

1. Verfahren zur Überwachung der Stickoxid-Speicherfähigkeit eines als Startkatalysator eingesetzten Stickoxid-Speicherkatalysators in einer Abgasreinigungsanlage (1) eines Kraftfahrzeugs mit Magermotor, welche ein Katalysatorsystem aus dem Startkatalysator (3) und einem ebenfalls als Stickoxid-Speicherkatalysator ausgebildeten Hauptkatalysator (4) enthält, wobei in einem Normalbetrieb des Katalysatorsystems, wenn die Auswertung des Stickoxid-Schlupfes hinter dem Katalysatorsystem ein Regenerationskriterium übersteigt, jeweils eine Total-Regeneration des Katalysatorsystems vorgenommen wird durch kurzzeitiges Umschalten des Motors von Magerbetrieb in Fettbetrieb,
**dadurch gekennzeichnet,**
**daß** zur Überprüfung der Stickoxid-Speicherfähigkeit des Startkatalysators (3) das gesamte Katalysatorsystem bis zum Erreichen des Regenerationskriteriums mit Stickoxiden beladen und dann eine Teil-Regeneration des Katalysatorsystems vorgenommen wird, die nur aus einer Regeneration des Startkatalysators (3) besteht, wozu der Fettbetrieb beendet und in den Magerbetrieb zurückgeschaltet wird, wenn zwischen Startkatalysator (3) und Hauptkatalysator (4) ein Durchbruch fetten Abgases registriert wird, und daß die Zeitdauer nach dem Zurückschalten in den Magerbetrieb bis zum erneuten Übersteigen des Regenerationskriteriums hinter dem Katalysatorsystem als Maß für die Stickoxid-Speicherfähigkeit des Startkatalysators (3) gemessen wird.

2. Verfahren nach Anspruch 1,
**dadurch gekennzeichnet,**
**daß** als Regenerationskriterium das Übersteigen der Stickoxidkonzentration im Abgas hinter dem Katalysatorsystem über einen vorgegebenen Wert gewählt wird.

3. Verfahren nach Anspruch 1,
**dadurch gekennzeichnet,**
**daß** als Regenerationskriterium das Übersteigen der kumulierten Stickoxidmasse im Abgas hinter dem Katalysatorsystem über einen vorgegebenen Wert gewählt wird.

4. Verfahren nach Anspruch 1,
**dadurch gekennzeichnet,**
**daß** es sich bei dem Magermotor um einen wand/luft-geführten oder strahlgeführten Magermotor handelt.

## Claims

1. Method for monitoring the nitrogen oxide storage capacity of a nitrogen oxide storage catalyst used as a starting catalyst in an exhaust-gas purification system (1) of a motor vehicle with a lean-burn engine, the system including a catalyst system comprising the starting catalyst (3) and a main catalyst (4), which is likewise designed as a nitrogen oxide storage catalyst, wherein, during normal operation of the catalyst system, a total regeneration of the catalyst system is performed, by the engine being briefly switched from lean-burn to rich-burn mode, each time the evaluation of the nitrogen oxide slippage downstream of the catalyst system exceeds a regeneration criterion, **characterized in that**, to check the nitrogen oxide storage capacity of the starting catalyst (3), the entire catalyst system is loaded with nitrogen oxides until the regeneration criterion is reached, and then a partial regeneration of the catalyst system, comprising a regeneration of just the starting catalyst (3), is carried out, for the purpose of which partial regeneration the rich-burn mode is terminated and the engine is switched back to lean-burn mode when a breakthrough of rich exhaust gas is recorded between the starting catalyst (3) and the main catalyst (4), and **in that** the time between the engine being switched back to lean-burn mode and the regeneration criterion being exceeded once again downstream of the catalyst system is measured as a measure of the nitrogen oxide storage capacity of the starting catalyst (3).

2. Method according to Claim 1, **characterized in that** the regeneration criterion selected is the nitrogen oxide concentration in the exhaust gas downstream of the catalyst system exceeding a predetermined value.

3. Method according to Claim 1, **characterized in that** the regeneration criterion selected is the cumulative nitrogen oxide mass in the exhaust gas downstream of the catalyst system exceeding a predetermined value.

4. Method according to Claim 1, **characterized in that** the lean-burn engine is a wall/air-guided or jet-guided lean-burn engine.

## Revendications

1. Procédé de surveillance de la capacité d'adsorption d'oxyde d'azote d'un piège d'oxyde d'azote employé en tant que catalyseur de démarrage dans une installation d'épuration de gaz d'échappement (1) d'un véhicule automobile avec un moteur fonctionnant en régime pauvre, qui comprend un système de catalyseur composé du catalyseur de démarrage (3) et d'un catalyseur principal (4) se présentant également sous la forme d'un piège d'oxyde d'azote, dans lequel, en fonctionnement normal du système de catalyseur, lorsque l'évaluation de la dérive de l'oxyde d'azote après le système de catalyseur dépasse un critère de régénération, on effectue chaque fois une régénération totale du système de catalyseur par un bref passage du moteur du régime pauvre au régime riche, **caractérisé en ce que**, pour vérifier la capacité d'adsorption d'oxyde d'azote du catalyseur de démarrage (3), tout le système de catalyseur est chargé d'oxydes d'azote jusqu'à atteindre le critère de régénération et on effectue ensuite une régénération partielle du système de catalyseur, qui ne consiste qu'en une régénération du catalyseur de démarrage (3), pour laquelle on cesse le régime riche et on revient au régime pauvre, lorsque l'on enregistre une irruption de gaz d'échappement riches entre le catalyseur de démarrage (3) et le catalyseur principal (4), et **en ce que** l'on mesure la durée temporelle, après le retour au régime pauvre, jusqu'à un nouveau dépassement du critère de régénération après le système de catalyseur comme mesure de la capacité d'adsorption d'oxyde d'azote du catalyseur de démarrage (3).

2. Procédé selon la revendication 1, **caractérisé en ce que** l'on choisit comme critère de régénération un dépassement de la concentration d'oxyde d'azote dans les gaz d'échappement après le système de catalyseur au-delà d'une valeur prédéterminée.

3. Procédé selon la revendication 1, **caractérisé en ce que** l'on choisit comme critère de régénération le dépassement de la masse cumulée d'oxyde d'azote dans les gaz d'échappement après le système de catalyseur au-delà d'une valeur prédéterminée.

4. Procédé selon la revendication 1, **caractérisé en ce que** le moteur fonctionnant en régime pauvre est un moteur à régime pauvre avec injection d'air en paroi ou avec pulvérisation.
